# EUROPEAN PATENT SPECIFICATION

(11) **EP 3 013 149 B1**
(45) Date of publication and mention of the grant of the patent: **14.12.2016**
(21) Application number: 14734061.6
(22) Date of filing: 20.06.2014
(51) Int. Cl.: A23F 3/06, A23F 3/08

(54) **A PROCESS FOR PRODUCING A TEA PRODUCT**
VERFAHREN ZUR HERSTELLUNG EINES TEEPRODUKTS
PROCÉDÉ DE PRODUCTION D'UN PRODUIT DE THÉ

(30) Priority: 28.06.2013 EP 13174306
(43) Date of publication of application: 04.05.2016
(73) Proprietor: Unilever N.V., 3013 AL Rotterdam (NL); Unilever PLC, a company registered in England and Wales under company no. 41424, London EC4Y 0DY (GB)
(72) Inventor: BASAVARAJU, Lokesh, Bangalore 560066 (IN); GUTTAPADU, Sreeramulu, Bangalore 560066 (IN); PALAGIRI, Swathy, Bangalore 560066 (IN)
(74) Representative: Askew, Sarah Elizabeth
(86) International application number: PCT/EP2014/063026
(87) International publication number: WO 2014/206883

(56) References cited:
- WO-A1-2011/151237
- US-A- 4 051 264

## Description

### Technical Field

The present invention relates to a process of producing a tea product. More particularly the present invention relates to a process of producing a leaf tea product with black tea characteristics.

### Background

The size of the black tea leaf product has commercial significance in the tea industry. Long leaf tea products fetch higher price at the marketplace and are also preferred by consumers. Regular black tea involves the following steps of manufacture: (i) withering of fresh leaves of the plant *Camellia sinensis,* which is a process where plucked tea leaves are allowed to lose moisture, e.g. in a shallow trough, and during which biochemical reactions occur causing the formation of many beneficial compounds including aroma compounds; (ii) maceration of the withered leaves which is a process where the tea cellular structure is broken which causes further biochemical reactions to occur; (iii) fermentation of the macerated leaves in which enzymes in the tea leaf use atmospheric oxygen to oxidize various substrates to produce coloured products; and (iv) drying of the fermented leaves at high temperatures to stop the enzyme activity and bring down the moisture.

It is somewhat essential to macerate (or any other form of size reduction/damage) the leaves for fermentation, which produces typical taste of black leaf tea product which includes astringency, aroma, colour etc. As an effect of this process, the size of the leaf is reduced.

WO 2013/075912 (Unilever, 2013) discloses a process for producing a black tea product with enhanced sensorials. This process involves a step of anaerobic incubation followed by comminution of the lea leaf, and then a subsequent fermentation step. This process leads to a tea product which has smaller leaf size (due to the comminution).

There have also been some efforts to obtain whole leaf fermented tea product. For example, US6254902 (Lipton, 2001) discloses a method for processing whole leaf tea that involves impregnating tea leaves with liquid carbon dioxide within a pressure vessel, depressurizing the vessel at a rate that is sufficient to freeze the liquid carbon dioxide, applying sufficient heat to cause the frozen carbon dioxide to sublime and consequently initiate fermentation within the leaves, allowing the tea to ferment for a time that is sufficient to achieve desired liquor properties, and drying the fermented product to yield the whole leaf tea.

Although the prior art discloses a process for producing long leaf fermented tea product, it uses a pressurized system with liquid carbon dioxide which is a hazardous substance and the process is also not cost effective and difficult to implement.

Thus there is a need for a process which produces a tea product with black tea characteristics without comminution of the fresh tea leaf thereby producing a tea product with long leaf without using liquid carbon dioxide or any pressurized system and moreover which is simple, cost effective and easy to implement.

### Objects of the invention

It is therefore an object of the present invention to provide a process for producing a long leaf tea product with black tea characteristics.

It is a further object of the present invention to provide a process for producing a long leaf tea product with black tea characteristics without using liquid carbon dioxide or any pressurized system and moreover which is simple, cost effective and easy to implement.

The present inventors have surprisingly found that a process that includes an initial step of anaerobic conditioning followed by exposing the leaf at ambient condition provides a long leaf tea product with black tea characteristics without the need for comminution.

### Summary of the invention

In a first aspect of the present invention there is provided a process of preparation of a leaf tea product with black tea characteristics comprising the steps of:
a. incubating fresh tea leaf at a temperature in the range 4°C to 60°C under anaerobic conditions for a period of 4-36 hours;
b. exposing the leaf at a temperature of 15-35°C for 70 minutes to 4 hours
wherein there is no step of comminution of the tea leaf before incubation and/or before step (b).

In a second aspect of the present invention there is provided a black leaf tea product as obtained and/or obtainable by the process of the first aspect.

Any feature of one aspect of the present invention may be utilized in any other aspect of the invention. The word "comprising" is intended to mean "including" but not necessarily "consisting of" or "composed of." In other words, the listed steps or options need not be exhaustive. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Fresh tea leaf" refers to tea leaf, buds and/or stem that have never been dried to a water content of less than 30% by weight, and usually have water content in the range 60 to 90%.

"Black tea" refers to substantially fermented tea. Black tea has different characteristics than green tea. Black tea is more astringent in taste and less bitter than green tea. The redness of the black tea liquor is also significantly higher than green tea. Black tea also contains higher theaflavins.

Therefore "black tea characteristics" as mentioned herein this specification preferably means a tea product which is more astringent and less bitter in taste with increased red coloured liquor and with higher theaflavins content.

The present invention provides a process of preparation of a leaf tea product with black tea characteristics comprising the steps of:
a. incubating fresh tea leaf at a temperature in the range 4°C to 60°C under anaerobic conditions for a period of 4-36 hours;
b. exposing the leaf at a temperature of 15-35°C for 70 minutes to 4 hours.
wherein there is no step of comminution of the tea leaf before incubation and/or before step (b).

### The step (a):

### Anaerobic incubation:

The step (a) includes incubating the plucked leaf at a temperature in the range 4°C to 60°C under anaerobic conditions for a period of 4-36 hours. The term "anaerobic conditions" as used herein means that the gas phase in contact with the leaf has less than 3% oxygen by volume. Oxygen in the gas phase in contact with the leaf is preferably less than 2%, more preferably less than 1%. It is particularly preferred that the gas phase in contact with the leaf is substantially free of oxygen.

Anaerobic conditions:
Preferably, the anaerobic conditions in the step (a) are achieved by:
   i. Placing the plucked tea leaf in a container, and closing the container, or;
   ii. Placing the tea leaf in a container, purging a gas other than oxygen through the container, and closing the container

By placing the plucked leaf in a container and closing the container, the oxygen concentration in the gas phase decreases with time and anaerobic conditions are achieved after keeping the container closed for certain amount of time. The container is closed for duration preferably greater than about 3 hours, more preferably greater than 4 hours and most preferably greater than about 6 hours or even greater than about 8 hours. This way of achieving anaerobic condition is preferable as it is cost effective and easy to implement.

Alternatively, the anaerobic conditions are achieved by placing the leaf in a container, purging a gas other than oxygen through the container and closing the container. The gas other than oxygen is preferably nitrogen or carbon dioxide, more preferably nitrogen.

Once the container is closed in the step (i) or (ii) above, there is no particular restriction as to the pressure in the container. Pressure inside the closed container is preferably from 1-1000 mm Hg absolute (1.3 milibar-1.3bar), more preferably 10-800 mm Hg absolute (13 millibar - 1 bar) and most preferably about 20.

It is preferred that the moisture loss from the leaf during the step (a) is as low as possible. This is advantageously and conveniently achieved by carrying out the step (a) under closed conditions. The incubated tea leaf after the step (a) comprises water in the range of preferably from 70 to 75% by weight.

### Incubation temperature:

The step (a) is at a temperature in the range 4°C to 60°C, preferably in the range 4-55°C, more preferably in the range 10-40°C.

### Duration of anaerobic incubation:

The plucked leaf is incubated under anaerobic conditions for a period of 4-36 hours, preferably for a period of 6-30 hours, more preferably for a period of 8-25 hours, most preferably for a period of 10-24 hours. It is particularly preferred that the period of anaerobic incubation is about 12-20 hours.

The tea leaf is not subject to maceration or any kind of size reduction process before the incubation step or in between the incubation step and step (b).

### The step (b):

After the incubation step as disclosed above the process includes exposing the tea leaf at a temperature of 15-35°C for 70 minutes to 4 hours. Preferably the temperature of exposure is 20 - 35°C, more preferably 25 - 35°C. The preferred tome of exposure is for 75 minutes to 4 hours, more preferably for 80 minutes to 4 hours, most preferably for 90 minutes to 4 hours.

The step (b) may be achieved by keeping the leaf in open atmosphere with the above described conditions. The open atmosphere preferably means the presence of oxygen and hence signifies aerobic condition.

After step (b) the leaf tea may further preferably be dried at a temperature of 50 - 150°C. During drying step, the incubated tea leaf is dried to moisture content preferably less than 10% by total mass of the tea leaf, more preferably less than 5 % by total mass of the tea leaf.

The drying step is preferably carried out by thermal drying, freeze drying or vacuum drying.

Thermal drying is preferably carried out by contacting the leaf with air; with the temperature of air being preferably 50-150°C, more preferably 60-130°C, most preferably 80-120 °C. Thermal drying may be carried out in any conventional dryer. However, a fluidized bed dryer or a tray dryer is particularly preferred for thermal drying.

The leaf can also be dried by vacuum drying. During vacuum drying the tea leaf is subjected to an absolute pressure of preferably from 5 to 500 mm Hg, more preferably from 50 to 300 mm Hg and most preferably from 100 to 200 mm Hg. Vacuum drying is carried out at a temperature in the range of preferably 20-70°C, more preferably 25-60°C and most preferably 30-55°C. Vacuum drying may be carried out in any suitable vacuum drier, preferably in a rotary vacuum drier.

### The leaf tea product:

Black tea products are generally characterized by their taste and their relatively higher amount of theaflavins content. The taste of the black tea product includes astringency, aroma, colour etc. The leaf tea product as obtained by the process of the present invention has a theaflavins content similar to regular black tea product.

The theaflavins content of the tea product of the present invention is in between 1.3 - 1.8 % by weight, which is similar to the theaflavins content in a regular black tea product.

Black tea contains relatively less amount of catechins. Catechins content in regular black tea generally ranges from 0.5 to 3 % by weight. Catechins are known to be beneficial for health. One of the other advantages of the process of the present invention is that it produces a leaf tea product with black tea characteristics with relatively high catechins content when compared with a regular black tea product. The catechins content of the tea product as obtained and/or obtainable by the process of the present invention is in the range of 5 - 10% by weight.

The ratio of cis-3-hexen-1-ol to 2-Phenyl ethanol of the tea product of the present invention is greater than 1, preferably greater than 2 and most preferably greater than 3.

The length of the leaf in the leaf tea product of the present invention is ranging from 10 mm to 60 mm, preferably 10 mm to 50 mm and more preferably 10 mm to 40 mm.

The width of the leaf in the leaf tea product of the present invention is ranging from 3 mm to 40 mm, preferably 3 mm to 30 mm and most preferably 3 mm to 25 mm.

The individual leaf area in the leaf tea product of the present invention is ranging from 2 to 5 cm² and preferably from 2-4cm².

Optionally the tea product may be blended with some other tea product to obtain unique characteristics.

Now the invention will be demonstrated in terms of examples. The following examples are just for illustration and in no way limits the scope of the present invention.

### Examples:

### Measurement methods:

A solvent mix comprising methanol and water in a ratio of 4:6 was used for extraction. The extraction solvent mix was kept in a water bath at 60°C prior to using for extraction. 100mg of leaf tea product was placed in an extraction tube and 5 mL of the extraction solvent was added to it. The mixture was kept for 20 minutes in an ultrasonicator bath maintained at 60°C. The extraction mix was allowed to cool to room temperature and centrifuged at 3000g for 15 minutes. The supernatant was collected in a 10 mL volumetric flask. The same extraction procedure was repeated with residue from centrifugation using fresh extraction solvent. Both the extracts were mixed and final volume was made to 10mL. These extracts were used for catechins analysis and theaflavins analysis.

### (a) Theaflavins (TF) content:

Samples were analyzed by HPLC using an octadecylsilica (C18) column (Novapak ex. Waters, 3.9 mm i.d. × 150 mm) with detection at a wavelength of 380 nm, column temperature of 40°C, injection volume of 20 micro L and flow rate of 1 mL/min. The mobile phases for the theaflavins analysis were 2% (v/v) acetic acid in water (as mobile phase A) and acetonitirile (as mobile phase B). A linear gradient from 8% B to 69% B over 50 min was used to separate the theaflavins following which the column was equilibrated with 8% of buffer A for 5 min. Pure theaflavins ( Sigma Aldrich, > 90%, HPLC grade) were used as standard for quantification.

### (b) Catechins content:

Total catechins contents were determined using the ISO method for the determination of catechins in green and black tea, using high performance liquid chromatography (ISO 14502-2:2005).

### (c) Measurement of mass ratios of aroma marker compounds:

The following procedure was used to determine the amounts of cis-3-hexen-1-ol, 2-phenylethanol and methyl salicylate. The amounts of these compounds are expressed as micrograms per kg dry mass of the tea leaf unless specified otherwise. The mass ratios are calculated from the amounts.

### Procedure:

(i) Weigh 0.3 g of tea product in a Thermoflask
(ii) Add 30 mL of distilled water at 100°C
(iii) Close the lid and wait for 5 minutes with occasional stirring.
(iv) At the end of 5 minutes, filter the entire liquid and feed a 3 mL aliquot of the filtered liquid into a headspace GC vial of 22 mL capacity
(v) Add 0.5gm of sodium chloride into the vial and magnetic bead. Seal the vial immediately.
(vi) Incubate the vial in the dry heating bath with stirrer at 70°C for about 5 minutes
(vii) Insert SPME (solid phase micro-extraction) fiber after 5 minutes and incubate with the fiber for 35 more minutes
(viii) At the end of 40 min, remove the SPME (solid phase micro-extraction) fiber and inject into the GC-FID. (Desorption time of 5 min).

### GC Conditions:

Column = Cpwax (30m X0.25mm ), Inject Port temp = 230°C, Detector temp = 250°C, Carrier gas flow = 1.3ml/min (He), Split ratio = 10: 1, Oven ramp = initial 45°C hold for 2 min, 6°C/min to 160°C hold for 0 min, 10°C/min to 230°C hold for 5 min

### Process of preparation of the leaf tea product:

Fresh tea leaves (moisture content ∼77%) from the Devershola plantation (Tamilnadu, southern India) were taken and placed in an air-tight aseptic plastic bag, which was immediately sealed and incubated at 25°C for 18 hours. After that, the incubated tea leaves were divided equally into four batches:

### Example A:

The first batch was taken without practically exposing it to the ambient conditions and dried at ∼130°C in a tray drier for about 20 minutes until it reached moisture content less than 5% by weight.

### Example B:

The second batch was taken and exposed the incubated leaf at ambient temperature (∼25°C) for 60 minutes. After 60 minutes the leaves were taken and dried at ∼130°C in a tray drier for about 20 minutes until it reached moisture content less than 5%.

### Example 1:

The third batch was taken and exposed the incubated leaf at ambient temperature (∼25°C) for 90 minutes. After 90 minutes the leaves were taken and dried at ∼130°C in a tray drier for about 20 minutes until it reached moisture content less than 5%.

### Example 2:

The fourth batch was taken and exposed the incubated leaf at ambient temperature (∼25°C) for 120 minutes. After 120 minutes the leaves were taken and dried at ∼130°C in a tray drier for about 20 minutes until it reached moisture content less than 5%.

As another control for regular black tea was taken which was prepared as follows:

### Example C:

Fresh tea leaves (moisture content ∼77%) from the Devershola plantation (Tamilnadu, southern India) followed by withering the tea leaf by exposing it to ambient temperature (25°C) for 18 hours. After the withering the moisture content of the tea leaf was ∼70%. After that the tea leaves were subjected to CTC (cut tear curl) for 4 times to obtain macerated dhool. The macerated dhool was fermented (exposed to air at 25°C) for 90 minutes. The fermented dhool was then dried at 130°C in a tray drier for about 20 minutes until it reached moisture content less than 5% by weight.

All the above products were then analyzed for its catechins content, theaflavins content and mass ratio of aroma marker compounds as per the procedures described above.

The results of these experiments are summarized below in Table 1.

**Table 1**

| Example Number | Catechins Content (wt %) | Theaflavins content (wt %) | ratio of cis-3-hexen-1-ol to 2-Phenyl ethanol | ratio of cis-3-hexen-1-ol to methyl salicylate |
|---|---|---|---|---|
| A | 16.15 | 0 | 0.65 | 0.01 |
| B | 10.50 | 1.18 | 0.58 | 0.02 |
| C | 2.42 | 1.65 | 6.00 | 0.10 |
| 1 | 8.01 | 1.45 | 3.12 | 0.08 |
| 2 | 7.46 | 1.51 | 6.65 | 0.10 |

From the above table it is evident that the tea product produced by the process of the present invention (Example 1 and 2) produces a tea product with higher amount theaflavins and with higher signature ratios of cis-3-hexen-1-ol to 2-Phenyl ethanol and cis-3-hexen-1-ol to methyl salicylate when compared with Example A and B. It is notable that Example 1 and Example 2 produced a tea product which is comparable with regular black tea product as produced by Example C. Therefore it is clear that the process of the present invention produces a tea product without macerating the tea leaf (therefore keeping the leaf size larger) which is similar to regular black leaf tea products. One more advantage of the present invention is also evident from Table 1. Examples, that are inside the scope of the present invention (Example 1 and 2) produce a tea product with black tea characteristics at the same time it also retains the high catechins levels in the product. The tea product produced by Example 1 and 2 contains much higher amount of catechins when compared with regular black tea product produced by Example C.

### Sensorial study/measurement of the black tea product:

For sensory evaluation and colour measurement the infusion of the black tea product was prepared by adding 100 mL of boiling water to 2g of dried leaf, allowing it to stand for 2 min and stirring once before straining.

### Colour measurement:

The Infusions were used for the colour measurement. Colour (CIE L*a*b* values) was measured using a Hunter lab Ultrascan XE (Model-USXE/UNI version 3.4, Hunterlab Associates Laboratories Inc. Virginia). A halogen cycle lamp was used as the light source. The illuminant used was D65 and the measurements were made at 10°-Observer angle. Measurements were made using a quartz cuvette of 10 mm path length. Tea infusion was filled up to the brim in the cuvette and placed in the instrument for color measurement. The instrument was calibrated using a standard white tile (Hunterlab Duffuse/8°, mode-RSEX, Port-1" and area-large) in accordance with the instructions provided in the instructions manual. The L*a*b* values were measured at room temperature (∼25°C).

Positive a* is red and negative a* is green. Generally for black tea product the a* value is positive. The more higher the a* value the redder the infusions are. Black tea products are characterized by their reddish infusion colour.

The results of the experiments are summarized in Table 2.

**Table 2:**

| Example Number | Colour values (a*) |
|---|---|
| A | -3.13 |
| B | -2.86 |
| 1 | 6.51 |
| 2 | 7.65 |

From Table 2 it is clear that the infusion produced from the tea leaf product of the present invention (Example 1 and 2) produces tea product with reddish coloured infusion when compared with the process that are outside the scope of the present invention (Example A and B).

### Sensory evaluation:

The infusions were used for sensory evaluation. The infusions were tasted by a group of highly trained tea taster. They tasted the different tea infusions in terms of three main attributes viz. aroma, flavour and taste. The results of the sensory evaluation are summarized below in table 3.

**Table 3:**

| Example Number | Aroma | Flavour | Taste |
|---|---|---|---|
| A | More green and mild floral | Fresh green and mild floral | More Bitter and less astringent, green tea taste |
| B | Green and less floral | Green and less floral | Bitter and less astringent, green tea taste |
| 1 | High Floral, Less green, black tea notes | High floral, less green, black tea notes | less bitter, more astringent, black tea taste |
| 2 | black tea notes | black tea notes | less bitter, more astringent, black tea taste |

From Table 3 it is evident that tea products produced by the process of the present invention (Example 1 and 2) have black tea characteristics. But the tea product produced by the process outside the scope of the present invention does not have black tea characteristics instead it has green tea characteristics.

From the above description and examples it is evident that by the process of the present invention it is now possible to produce a long leaf tea product with black tea characteristics without using liquid carbon dioxide or any pressurized system and moreover which is simple, cost effective and easy to implement.

## Claims

1. A process of preparation of a leaf tea product with black tea characteristics comprising the steps of:
a. incubating fresh tea leaf at a temperature in the range 4°C to 60°C under anaerobic conditions for a period of 4-36 hours;
b. exposing the leaf at a temperature of 15-35°C for 70 minutes to 4 hours;
wherein there is no step of comminution of the tea leaf before incubation and/or before step (b).

2. A process as claimed in one of the preceding claims 1 or 2 further comprising the step of drying the tea leaf at a temperature of 50-150°C.

3. A process as claimed in any one of the preceding claims wherein the anaerobic conditions are achieved by:
i. placing the fresh tea leaf in a container, and closing the container, or;
ii. placing the tea leaf in a container, purging a gas other than oxygen through the container, and closing the container, or placing the leaf in an airtight chamber or under vacuum.

4. A process as claimed in any one of the preceding claims wherein there is no step of extraction of tea leaf prior to the incubation step.

5. A leaf tea product as obtainable by the process claimed in any one of the preceding claims.

6. A leaf tea product as claimed in claim 5 wherein the ratio of cis-3-hexen-1-ol to 2-Phenyl ethanol is greater than 1.

7. A tea product as claimed in any one of the preceding claims 5 or 6 wherein the length of the leaf in the black leaf tea product is ranging from 10 mm to 60 mm.

8. A tea product as claimed in any one of the preceding claims 6 to 7 wherein the width of the leaf in the black leaf tea product is ranging from 3 mm to 40 mm.

9. A leaf tea product as claimed in any one of the preceding claims 6 to 8 wherein the individual leaf area in the black tea product ranging from 2 to 5 cm².

10. A leaf tea product as claimed in any one of the preceding claims 6 to 9 wherein the catechins content in the tea product is greater than 5% by weight.

## Patentansprüche

1. Verfahren zur Herstellung eines Blattteeproduktes mit den Eigenschaften von Schwarztee, umfassend die Schritte:
a. frisches Teeblatt wird unter anaeroben Bedingungen während einer Zeitdauer von 4-36 Stunden bei einer Temperatur in dem Bereich von 4°C bis 60°C inkubiert,
b. das Blatt wird während 70 Minuten bis 4 Stunden einer Temperatur von 15-35°C ausgesetzt,
wobei kein Schritt des Zerkleinerns des Teeblatts vor der Inkubation und/oder vor Schritt (b) stattfindet.

2. Verfahren, wie in einem der vorhergehenden Ansprüche 1 oder 2 beansprucht, des Weiteren umfassend den Schritt des Trocknens des Teeblatts bei einer Temperatur von 50-150°C.

3. Verfahren, wie in irgendeinem der vorhergehenden Ansprüche beansprucht, wobei die anaeroben Bedingungen erreicht werden durch;
i. das frische Teeblatt wird in einen Behälter gelegt und der Behälter wird verschlossen oder
ii. das Teeblatt wird in einen Behälter gelegt, ein Gas, anders als Sauerstoff, wird durch den Behälter gespült und der Behälter wird verschlossen oder das Blatt wird in eine luftdichte Kammer gelegt oder unter Vakuum gesetzt.

4. Verfahren, wie in irgendeinem der vorhergehenden Ansprüche beansprucht, wobei kein Schritt der Extraktion des Teeblatts vor dem Inkubationsschritt stattfindet.

5. Blattteeprodukt, erhältlich durch das Verfahren nach irgendeinem der vorhergehenden Ansprüche.

6. Blattteeprodukt, wie im Anspruch 5 beansprucht, wobei das Verhältnis von cis-3-Hexen-1-ol zu 2-Phenylethanol größer als 1 ist.

7. Teeprodukt, wie in irgendeinem der vorhergehenden Ansprüche 5 oder 6 beansprucht, wobei die Länge des Blattes in dem Schwarztee-Blattprodukt in dem Bereich von 10 mm bis 60 mm liegt.

8. Teeprodukt, wie in irgendeinem der vorhergehenden Ansprüche 6 bis 7 beansprucht, wobei die Breite des Blatts in dem Schwarztee-Blattprodukt in dem Bereich von 3 mm bis 40 mm liegt.

9. Blattteeprodukt, wie in irgendeinem der vorhergehenden Ansprüche 6 bis 8 beansprucht, wobei der individuelle Blattbereich in dem Schwarztee-Produkt in dem Bereich von 2 bis 5 cm² liegt.

10. Blattteeprodukt, wie in irgendeinem der vorhergehenden Ansprüche 6 bis 9 beansprucht, wobei der Gehalt an Catechinen in dem Teeprodukt mehr als 5 Gewichts-% beträgt.

## Revendications

1. Procédé de préparation d'un produit de thé en feuille avec des caractéristiques de thé noir comprenant les étapes de :
a. incubation de feuille de thé fraiche à une température dans l'intervalle de 4°C à 60°C dans des conditions anaérobies sur une période de 4-36 heures ;
b. exposition de la feuille à une température de 15-35°C pendant de 70 minutes à 4 heures ;
dans lequel il n'y a pas d'étape de réduction en poudre de la feuille de thé avant l'incubation et/ou avant l'étape (b).

2. Procédé selon l'une quelconque des revendications 1 ou 2 précédentes comprenant de plus l'étape de séchage de la feuille de thé à une température de 50-150°C.

3. Procédé selon l'une quelconque des revendications précédentes, dans lequel les conditions anaérobies sont réalisées par :
i. disposition de la feuille de thé fraiche dans un récipient, et fermeture du récipient, ou ;
ii. disposition de la feuille de thé dans un récipient, purge d'un gaz différent de l'oxygène à travers le récipient, et fermeture du récipient, ou disposition de la feuille dans une chambre étanche à l'air ou sous vide.

4. Procédé selon l'une quelconque des revendications précédentes, dans lequel il n'y a pas d'étape d'extraction de la feuille de thé avant l'étape d'incubation.

5. Produit de thé en feuille comme pouvant être obtenu par le procédé selon l'une quelconque des revendications précédentes.

6. Produit de thé en feuille selon la revendication 5, dans lequel le rapport de cis-3-hexèn-1-ol au 2-phényléthanol est supérieur à 1.

7. Produit de thé selon l'une quelconque des revendications 5 ou 6 précédentes, dans lequel la longueur de la feuille dans le produit de thé noir en feuille est comprise entre 10 mm et 60 mm.

8. Produit de thé selon l'une quelconque des revendications 6 à 7 précédentes, dans lequel la largeur de la feuille dans le produit de thé noir en feuille est comprise entre 3 mm et 40 mm.

9. Produit de thé en feuille selon l'une quelconque des revendications 6 à 8 précédentes, dans lequel la surface de feuille individuelle dans le produit de thé noir est comprise entre 2 et 5 cm².

10. Produit de thé en feuille selon l'une quelconque des revendications 6 à 9 précédentes, dans lequel la teneur en catéchines dans le produit de thé est supérieure à 5 % en masse.
